# DEMANDE DE BREVET EUROPEEN

(11) **EP 0 934 879 A1**
(43) Date de publication de la demande: **11.08.1999**
(21) Numéro de dépôt: 99400247.5
(22) Date de dépôt: 04.02.1999
(51) Int. Cl.: B64F 1/22

(54) **Dispositif de contrôle de l'angle entre un véhicule tracteur et une remorque**

(30) Priorité: 09.02.1998 FR 9801475
(71) Demandeur: Airport Equipment Technologies, 79420 Reffannes (FR)
(72) Inventeur: Criquillion, Hervé, 78400 Chatou (FR); Decoux, Laurent, 37000 Tours (FR); Tessier, Philippe, 37150 Francueil (FR)
(74) Mandataire: Lhuillier, René

(57) **Abrégé**

L'invention propose un dispositif de mesure de l'angle entre les axes longitudinaux d'un véhicule tracteur et d'un véhicule remorqué par ce tracteur, comprenant un premier détecteur de cap placé sur ledit tracteur et servant à mesurer l'orientation du tracteur par rapport à une première direction fixe de référence, un second détecteur de cap placé sur ladite remorque et servant à mesurer l'orientation de la remorque par rapport à une seconde direction fixe de référence, une unité réceptrice des valeurs angulaires obtenues par ces deux détecteurs de cap, une unité de calcul servant à déterminer la valeur de l'angle entre ces deux véhicules, et un dispositif d'affichage dudit angle formé par les deux véhicules, au bénéfice du conducteur du tracteur.

## Description

L'invention concerne un dispositif de contrôle de l'angle formé par un véhicule tracteur et le véhicule remorqué par ce tracteur.

Il importe de pouvoir contrôler cet angle, par exemple, quand les pièces assurant l'attache entre les deux véhicules sont soumises à un couple de torsion, en plus de l'effort longitudinal. Ce couple de forces doit alors être pris en compte si l'on veut éviter que lesdites pièces d'attache ne se déforment ou ne se cassent.

Le problème envisagé se pose par exemple avec acuité dans le cas du remorquage des avions au sol dans les aéroports. Jusqu'à une date récente, on remorquait les avions en attachant un timon au tracteur et à la jambe de train avant de l'avion ; le timon était équipé de deux "fusibles mécaniques", prévus pour se briser quand, pour un fusible l'effort longitudinal, pour l'autre le couple, dépassaient les valeurs limites prévues.

Le dispositif de remorquage d'avions décrit ci-dessus est de nos jours progressivement remplacé par un nouveau type, dit "sans-timon", dans lequel on soulève le train avant de l'avion pour l'assujettir au tracteur ; cet agencement permet en effet d'obtenir une meilleure adhérence au sol des roues du tracteur. Le train avant tourne alors autour de la jambe en même temps que le tracteur tourne par rapport à l'avion.

Les tracteurs sont agencés de manière à pouvoir effectuer les remorquages de deux manières : dans la première, on tire l'avion vers l'avant, tandis que dans la seconde, on pousse l'avion en faisant reculer ce dernier. C'est surtout la seconde de ces opérations qui tend à occasionner des angles importants entre les axes longitudinaux du tracteur et de l'avion. Or, pour une certaine valeur de cet angle, les organes du train avant se trouvent en butée, et le train d'atterrissage risque alors d'être endommagé du fait du couple de forces appliqué.

Il est donc critique, non seulement vis-à-vis des coûts d'entretien mais aussi en matière de sécurité aérienne, quand on utilise un dispositif de remorquage du genre "sans-timon", de pouvoir s'assurer à tout instant que les spécifications techniques fournies par le constructeur de l'avion, concernant l'angle de rotation maximal du train avant, sont rigoureusement respectées. Il est également souhaitable que le dispositif utilisé, quel qu'il soit, n'impose pas de limite à la vitesse de remorquage, de sorte que le tracteur et l'avion remorqué puissent s'insérer commodément dans le trafic au sol des avions, qui doit obéir à certaines normes de vitesse. Enfin, il est économiquement souhaitable de pouvoir utiliser le même dispositif de remorquage quel que soit le modèle d'avion ou de tracteur auxquels on souhaite l'appliquer.

Dans le but d'assurer ce contrôle de l'angle entre l'avion et le tracteur, les dispositifs connus mesurent le couple de forces appliqué au train avant. Ces dispositifs sont fiables, mais peu sensibles. Comme le couple subi par le train d'atterrissage augmente soudainement au voisinage de la valeur dangereuse pour sa structure, si l'on utilise ce dispositif connu de contrôle de l'angle, quand le conducteur du tracteur s'aperçoit que ledit angle s'approche de cette valeur dangereuse, il ne dispose que d'une marge très faible pour pouvoir redresser avant que le train ne soit endommagé. On est donc obligé de remorquer les avions à basse vitesse pour avoir le temps de réagir quand on s'aperçoit qu'on s'approche dangereusement de l'angle limite, et de ce fait le remorquage est plus lent qu'on ne le souhaiterait. De plus, de tels dispositifs de mesure du couple de forces sont coûteux à fabriquer.

Au vu des défauts présentés par ces dispositifs connus, on pourrait songer à utiliser à la place un dispositif de mesure de l'angle entre les véhicules qui serait situé dans le champ de vision du conducteur en cours de remorquage, et comporterait un indicateur de cap de l'avion (par exemple un simple fil à plomb surplombant un rapporteur fixé au tracteur), ledit indicateur de cap étant agencé pour pouvoir se fixer, soit à la jambe de train, soit au nez de l'avion. Cette solution "stéréospécifique" toutefois est peu pratique, car un tel dispositif devrait être réalisé en un grand nombre de configurations différentes, une pour chaque type de tracteur et chaque type d'avion. En effet, la hauteur du nez de l'avion au-dessus du sol, la forme de la jambe de train et la carrosserie du tracteur varient considérablement d'un modèle à l'autre ; de plus, certains avions présentent pendant le remorquage une soute ouverte sur le devant, et d'autres non. Tous ces paramètres rendent très difficile, sinon impossible, la mise au point d'un dispositif stéréospécifique d'usage universel.

La présente invention résout le problème exposé ci-dessus, en proposant un dispositif non-stéréospécifique de mesure de l'angle entre les axes longitudinaux d'un véhicule tracteur et d'un véhicule remorqué par ce tracteur, ledit dispositif comprenant :
- un premier détecteur de cap placé sur ledit tracteur et servant à mesurer l'orientation du tracteur par rapport à une première direction fixe de référence,
- un second détecteur de cap placé sur ladite remorque et servant à mesurer l'orientation de la remorque par rapport à une seconde direction fixe de référence,
- une unité réceptrice des valeurs angulaires obtenues par ces deux détecteurs de cap,
- une unité de calcul servant à déterminer la valeur de l'angle entre les deux véhicules, et
- un dispositif d'affichage dudit angle formé par les deux véhicules, au bénéfice du conducteur du tracteur.

On peut, en ce qui concerne la mise en oeuvre de la présente invention, utiliser comme détecteur de cap tout appareil apte à effectuer une telle mesure angulaire, par exemple un compas, un goniomètre ou un gyromètre.

Selon les types de détecteurs de cap utilisés, lesdites directions de référence pourront être identiques (par exemple, le nord magnétique), ou distinctes (par exemple, le cap initial de chaque détecteur).

On atteint ainsi le but visé par l'invention, puisque chaque détecteur de cap peut être placé en tout endroit commode sur le véhicule qui lui a été attribué, sans que cela n'affecte en rien la mesure de l'angle entre les véhicules. On peut employer à cet effet tout moyen de fixation amovible approprié, par exemple un système de ventouses, ou bien prévoir un logement permanent pour un détecteur de cap sur l'un des véhicules ou pour les deux détecteurs de cap, selon l'application envisagée de l'invention. Par exemple, dans le cas décrit ci-dessus du remorquage d'avions au sol, il peut être avantageux de prévoir d'une part un détecteur de cap inamovible sur le tracteur, et d'autre part un détecteur de cap amovible que l'on fixe sur un avion juste avant de le remorquer.

Le programme de calcul de l'angle entre le tracteur et sa remorque sera adapté au type d'application envisagé du dispositif selon l'invention, mais il utilisera dans tous les cas la différence Δ entre les valeurs angulaires mesurées à un instant donné par les deux détecteurs de cap. Par exemple, si l'on prévoit qu'il sera toujours possible d'aligner chacun des deux détecteurs de cap avec l'axe longitudinal du véhicule respectif sur lequel il est fixé, on s'arrangera de préférence pour que les détecteurs de cap se réfèrent à la même direction, de sorte que l'angle entre les deux véhicules sera ici simplement égal à Δ. Un autre exemple caractéristique est celui où l'on prévoit qu'il sera toujours possible d'aligner le tracteur et la remorque avant de commencer le remorquage : dans ce cas, l'angle entre les deux véhicules à un instant donné sera égal à (Δ-Δ₀), où Δ₀ est la valeur initiale de la différence Δ ; il est à noter que pour les applications figurant dans cette catégorie, on n'a pas à se soucier de l'orientation de chaque détecteur de cap par rapport à l'axe longitudinal du véhicule sur lequel il est fixé, ce qui représente un avantage pratique considérable.

Le dispositif d'affichage peut soit indiquer en continu la valeur dudit angle entre les deux véhicules, soit comporter un système d'alarme visuelle ou auditive dont le signal devient de plus en plus pressant au fur et à mesure que l'on se rapproche de la valeur limite. Il peut éventuellement être incorporé par construction au sein des cadrans de conduite du véhicule tracteur.

On notera que le dispositif selon l'invention peut être employé indifféremment avec tous les modèles existants ou envisageables de tracteurs et de remorques, ainsi qu'avec tous les types d'attaches entre deux véhicules requérant un contrôle de l'angle entre leurs axes longitudinaux.

En outre, le dispositif selon l'invention est fiable, peu coûteux et facile à mettre en place.

## Revendications

1. Dispositif de mesure de l'angle entre les axes longitudinaux d'un véhicule tracteur et d'un véhicule remorqué (c'est-à-dire, soit tiré soit poussé) par ce tracteur, caractérisé en ce que ledit dispositif comprend :
- un premier détecteur de cap placé sur ledit tracteur et servant à mesurer l'orientation du tracteur par rapport à une première direction fixe de référence,
- un second détecteur de cap placé sur ladite remorque et servant à mesurer l'orientation de la remorque par rapport à une seconde direction fixe de référence,
- une unité réceptrice des valeurs angulaires obtenues par ces deux détecteurs de cap,
- une unité de calcul servant à déterminer la valeur de l'angle entre ces deux véhicules, et
- un dispositif d'affichage dudit angle formé par les deux véhicules, au bénéfice du conducteur du tracteur.
